# DEMANDE DE BREVET EUROPEEN

(11) **EP 4 707 072 A1**
(43) Date de publication de la demande: **11.03.2026**
(21) Numéro de dépôt: 25188983.8
(22) Date de dépôt: 11.07.2025
(51) Int. Cl.: B60N 3/10, A47G 23/02, B60R 11/02

(54) **ACCESSOIRE D' HABITACLE FORMANT UN PORTE-GOBELET ET UN PORTE TÉLÉPHONE**

(30) Priorité: 05.09.2024 FR 2409420
(71) Demandeur: Stellantis Auto SAS, 78300 Poissy (FR)
(72) Inventeur: FERLIN, CHRISTOPHE, 78960 VOISINS LE BRETONNEUX (FR)
(74) Mandataire: BCIP

(57) **Abrégé**

L'invention concerne un accessoire (1) d'habitacle conçu pour être inséré dans un porte-gobelet d'un habitacle d'un véhicule automobile, l'accessoire (1) comprenant une première partie (2) conçue pour permettre la contenance d'une boisson et délimitée par une paroi latérale (3), l'accessoire (1) comprenant une deuxième partie (4), séparée de la première partie (2), formant un support de téléphone portable, la deuxième partie (4) comprenant une interface de réception (5) conçue pour recevoir le téléphone, l'interface de réception (5) étant prolongée par des moyens de connexion (9) conçus pour interagir avec des moyens complémentaires (10) de la première partie (2) afin de solidariser les première (2) et deuxième (4) parties, l'accessoire (1) permettant de supporter le téléphone portable lorsque l'accessoire (1) est inséré dans le porte-gobelet et que les première (2) et deuxième (4) parties sont solidarisées.

## Description

Le domaine technique concerne les accessoires d'habitacle conçus pour être insérés dans un porte-gobelet d'habitacle d'un véhicule automobile et les véhicules automobiles présentant de tels accessoires.

Les constructeurs d'automobiles apportent beaucoup de soins dans le développement de leurs véhicules afin d'offrir à leurs clients des véhicules présentant une qualité de finition irréprochable. La qualité de finition se reflète, en premier lieu, dans la qualité des assemblages et des matériaux mis en œuvre dans le véhicule. Cependant, la qualité perçue par les clients est également influencée par la qualité des accessoires fournis avec le véhicule.

La plupart des véhicules sont désormais équipés de porte-gobelets permettant l'insertion d'un gobelet ou d'une canette, offrant au passager la possibilité de disposer d'une boisson maintenue en sécurité dans le porte-gobelet, sans risque d'être renversée. La plupart des véhicules comportent parfois des plateformes d'accueil pour un ou plusieurs téléphones portables. Cependant, de telles plateformes occupent une surface importante et les constructeurs font parfois le choix de ne pas mettre à disposition des passagers avant une telle plateforme. Les passagers peuvent alors déposer leur téléphone portable dans un porte-gobelet, qui ne peut plus alors accueillir de gobelet.

Ainsi, il existe un besoin d'une solution permettant d'offrir à un passager d'un véhicule, ne disposant pas d'une plateforme d'accueil d'un téléphone portable, d'une solution de rangement du téléphone.

La présente invention a pour objet de pallier les problèmes exposés précédemment. Dans ce contexte technique, un but de la présente invention est de fournir un accessoire mettant à profit un porte-gobelet du véhicule pour permettre de disposer d'un espace de réception d'un téléphone portable et d'un gobelet.

A cet effet, la présente invention se rapporte à un accessoire d'habitacle conçu pour être inséré dans un porte-gobelet d'un habitacle d'un véhicule automobile, l'accessoire comprenant une première partie conçue pour permettre la contenance d'une boisson et délimitée par une paroi latérale, l'accessoire comprenant une deuxième partie, séparée de la première partie, formant un support de téléphone portable, la deuxième partie comprenant une interface de réception conçue pour recevoir le téléphone, l'interface de réception étant prolongée par des moyens de connexion conçus pour interagir avec des moyens complémentaires de la première partie afin de solidariser les première et deuxième parties, l'accessoire permettant de supporter le téléphone portable lorsque l'accessoire est inséré dans le porte-gobelet et que les première et deuxième parties sont solidarisées.

L'invention concerne enfin un véhicule automobile comportant au moins un porte-gobelet et au moins un accessoire selon l'invention insérable dans un porte-gobelet.

Ainsi, l'accessoire selon l'invention est conçu pour être inséré dans un porte-gobelet. La première partie de l'accessoire permet alors de disposer de la fonction du porte-gobelet en permettant la contenance d'une boisson, directement dans la deuxième partie ou indirectement en faisant office de porte-gobelet ou de porte-canette. Grâce à la deuxième partie, l'accessoire permet également de mettre à profit l'accessoire pour supporter un téléphone portable. Par ailleurs, lorsque la deuxième partie n'est pas utilisée, celle-ci, séparée de la première partie, peut être rangée dans la boîte à gants. Ainsi, l'accessoire selon l'invention met à profit un porte-gobelet à disposition dans le véhicule selon l'invention pour offrir la possibilité de supporter un téléphone et une boisson.

Selon un mode de réalisation de l'accessoire d'habitacle, les moyens de connexion comportent au moins deux pattes de clipsage, chacune conçue pour coopérer avec au moins une rainure de clipsage des moyens complémentaires, chacune ménagée dans la paroi latérale.

Avantageusement, la paroi latérale présente une forme tronconique, la paroi latérale comportant au moins deux rainures de clipsage de forme hélicoïdale, diamétralement opposées l'une à l'autre.

Avantageusement encore, chaque patte de clipsage s'étend depuis l'interface de réception vers une extrémité distale, chaque extrémité distale présentant un pion dimensionné pour être glissé dans une rainure de clipsage.

Selon une possibilité de l'accessoire d'habitacle, l'interface de réception comporte au moins un rebord conçu pour permettre le soutien du téléphone reçu dans l'interface de réception, le rebord présentant une découpe pour permettre le passage d'un câble de recharge à travers le rebord, afin de connecter le téléphone reçu à une source d'alimentation électrique.

Avantageusement alors, l'interface de réception présente une plaque de soutien, le rebord faisant saillie de la plaque.

Avantageusement, la découpe forme une encoche.

Selon un mode de réalisation de l'accessoire d'habitacle, la première partie forme un porte-canette.

Selon une possibilité, lorsque les première et deuxième parties sont assemblées et que la première partie est insérée dans un porte-gobelet, l'interface de réception est conçue pour présenter le téléphone reçu dans l'interface de réception suivant un plan incliné par rapport à un axe horizontal du véhicule.

L'invention sera mieux comprise à la lecture de la description détaillée qui va suivre, donnée uniquement à titre d'exemple non limitatif et faite en se référant au dessin annexé sur lequel :

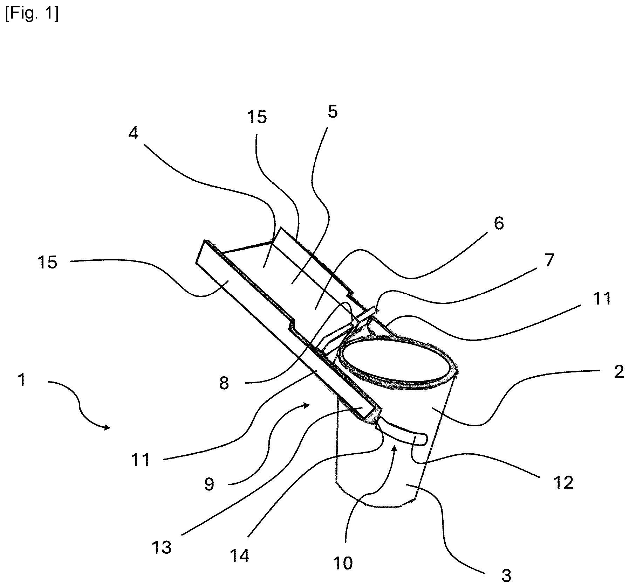

[Fig. 1] la figure 1 représente une vue en perspective d'un accessoire selon l'invention.

Un accessoire 1 d'habitacle selon l'invention, illustré sur la figure 1, est conçu pour être inséré dans un porte-gobelet d'un habitacle d'un véhicule automobile.

Comme illustré sur la figure, l'accessoire 1 comprend une première partie 2 conçue pour permettre la contenance d'une boisson. La première partie 2 est délimitée par une paroi latérale 3. Dans l'exemple illustré sur la figure, la paroi latérale 3 présente une forme tronconique. La première partie 2 forme un porte-canette. La première partie 2 est insérable dans un porte-gobelet de véhicule.

L'accessoire 1 selon l'invention comprend en outre une deuxième partie 4, séparée de la première partie 2, formant un support de téléphone portable, non illustré. A cet effet, la deuxième partie 2 comprend une interface de réception 5 conçue pour recevoir le téléphone. Dans le mode de réalisation illustré sur la figure, l'interface de réception 5 comporte une plaque 6 de soutien. La plaque 6 de soutien présente un rebord 7 faisant saillie de la plaque 6 et conçu pour permettre le soutien du téléphone reçu dans l'interface de réception 5. Le rebord 7 délimite un bord de la plaque 6 et le téléphone reçu dans l'interface de réception 5 repose au moins en partie sur le rebord 7. Comme illustré sur la figure, le rebord 7 comporte une découpe 8 pour permettre le passage d'un câble de recharge à travers le rebord 7 afin de connecter le téléphone reçu dans l'interface de réception 5 à une source d'alimentation électrique. Par exemple, la découpe 8 forme une encoche pour permettre le passage du câble lorsque ce dernier est connecté au téléphone.

L'interface de réception 5 est prolongée par des moyens de connexion 9 conçus pour interagir avec des moyens complémentaires 10 de la première partie 2, afin de solidariser les première 2 et deuxième 4 parties, l'accessoire 1 permettant de supporter le téléphone portable, lorsque l'accessoire 1 est inséré dans le porte-gobelet et que les première 2 et deuxième 4 parties sont solidarisées.

Selon une possibilité de l'invention, les première 2 et deuxième 4 parties sont obtenues par moulage de matières plastiques.

Dans le mode de réalisation illustré sur la figure, les moyens de connexion 9 comportent au moins deux pattes de clipsage 11, chacune conçue pour coopérer avec au moins une rainure 12 de clipsage des moyens complémentaires 10. Chaque patte de clipsage 11 s'étend depuis l'interface de réception 5 vers une extrémité distale 13 présentant un pion 14 dimensionné pour être glissé dans une rainure 12 de clipsage.

Chaque rainure 12 de clipsage est ménagée dans la paroi latérale 3. Par exemple, chaque rainure 12 traverse la paroi latérale 3. Dans le mode de réalisation illustré sur la figure, chaque rainure 12 présente une forme hélicoïdale. Au moins deux rainures 12 sont diamétralement opposées l'une à l'autre.

L'assemblage de la première partie 2 sur la deuxième partie 4 nécessite donc l'engagement de chaque pion 14 dans une rainure 12, puis le glissement de chaque pion 14 dans sa rainure 12, en opérant un mouvement de rotation de la première partie 2 autour de la deuxième partie 4.

Lorsque les première 2 et deuxième 4 parties sont assemblées et que la première partie 2 est insérée dans un porte-gobelet, l'interface de réception 5 est conçue pour présenter le téléphone reçu dans l'interface de réception 5 suivant un plan incliné par rapport à un axe horizontal du véhicule.

Dans un véhicule selon l'invention, présentant au moins un porte-gobelet, chaque accessoire 1 selon l'invention est insérable dans un porte-gobelet. La première partie 2 est alors partiellement introduite dans le porte-gobelet, faisant saillie de ce dernier. La deuxième partie 4 est alors disposée à l'extérieur du porte-gobelet, l'interface de réception 5 s'étendant dans un plan incliné.

Afin d'améliorer le maintien du téléphone reçu dans l'interface de réception 5, celle-ci comporte en outre deux bords latéraux 15 s'étendant le long de la plaque 6.

Ainsi, l'accessoire 1 est conçu pour être inséré dans un porte-gobelet. La première partie 2 de l'accessoire 1 permet de disposer de la fonction du porte-gobelet en permettant la contenance d'une boisson ; la boisson est contenue directement dans la deuxième partie 4 ou indirectement dans celle-ci en faisant office de porte-gobelet ou porte-canette. Grâce à la deuxième partie 4, l'accessoire 1 permet également de mettre à profit l'accessoire 1 pour supporter un téléphone portable. Par ailleurs, lorsque la deuxième partie 4 n'est pas utilisée, celle-ci, séparée de la première partie 2, peut être rangée dans la boîte à gants. Ainsi, l'accessoire 1 met à profit un porte-gobelet à disposition dans le véhicule selon l'invention pour supporter un téléphone et une boisson.

L'invention ne se limite pas au mode de réalisation de l'accessoire décrit ci-avant, seulement à titre d'exemple, mais d'autres modes de réalisation peuvent être conçus par l'homme de métier sans sortir du cadre et de la portée de la présente invention.

## Revendications

1. Accessoire (1) d'habitacle conçu pour être inséré dans un porte-gobelet d'un habitacle d'un véhicule automobile, l'accessoire (1) comprenant une première partie (2) conçue pour permettre la contenance d'une boisson et délimitée par une paroi latérale (3), l'accessoire (1) comprenant une deuxième partie (4), séparée de la première partie (2), formant un support de téléphone portable, la deuxième partie (4) comprenant une interface de réception (5) conçue pour recevoir le téléphone, l'interface de réception (5) étant prolongée par des moyens de connexion (9) conçus pour interagir avec des moyens complémentaires (10) de la première partie (2) afin de solidariser les première (2) et deuxième (4) parties, l'accessoire (1) permettant de supporter le téléphone portable lorsque l'accessoire (1) est inséré dans le porte-gobelet et que les première (2) et deuxième (4) parties sont solidarisées.

2. Accessoire (1) d'habitacle selon la revendication 1, **caractérisé en ce que** les moyens de connexion (9) comportent au moins deux pattes de clipsage (11), chacune conçue pour coopérer avec au moins une rainure (12) de clipsage des moyens complémentaires (10), chacune ménagée dans la paroi latérale (3).

3. Accessoire (1) d'habitacle selon la revendication 2, **caractérisé en ce que** la paroi latérale (3) présente une forme tronconique, la paroi latérale (3) comportant au moins deux rainures (12) de clipsage de forme hélicoïdale, diamétralement opposées l'une à l'autre.

4. Accessoire (1) d'habitacle selon la revendication 2 ou 3, **caractérisé en ce que** chaque patte de clipsage (11) s'étend depuis l'interface de réception (5) vers une extrémité distale (13), chaque extrémité distale (13) présentant un pion (14) dimensionné pour être glissé dans une rainure (12) de clipsage.

5. Accessoire (1) d'habitacle selon l'une des revendications 1 à 4, **caractérisé en ce que** l'interface de réception (5) comporte au moins un rebord (7) conçu pour permettre le soutien du téléphone reçu dans l'interface de réception (5), le rebord (7) présentant une découpe (8) pour permettre le passage d'un câble de recharge à travers le rebord (7) afin de connecter le téléphone reçu à une source d'alimentation électrique.

6. Accessoire (1) d'habitacle selon la revendication 5, **caractérisé en ce que** l'interface de réception (5) présente une plaque (6) de soutien, le rebord (7) faisant saillie de la plaque (6).

7. Accessoire (1) d'habitacle selon la revendication 5 ou 6, **caractérisé en ce que** la découpe (8) forme une encoche.

8. Accessoire (1) d'habitacle selon l'une des revendications 1 à 7, **caractérisé en ce que** la première partie (2) forme un porte-canette.

9. Accessoire (1) d'habitacle selon l'une des revendications 1 à 8, **caractérisé en ce que**, lorsque les première (2) et deuxième (4) parties sont assemblées et que la première partie (2) est insérée dans un porte-gobelet, l'interface de réception (5) est conçue pour présenter le téléphone reçu dans l'interface de réception (5) suivant un plan incliné par rapport à un axe horizontal du véhicule.

10. Véhicule automobile comportant au moins un porte-gobelet et au moins un accessoire (1) selon l'une des revendications 1 à 9 insérable dans un porte-gobelet.
